# EUROPEAN PATENT APPLICATION

(11) **EP 3 543 993 A2**
(43) Date of publication of application: **25.09.2019**
(21) Application number: 19153900.6
(22) Date of filing: 28.01.2019
(51) Int. Cl.: G09G 3/3208, G09G 3/20

(54) **METHOD, DEVICE, TERMINAL AND STORAGE MEDIUM FOR PREVENTING DISPLAY FROM IMAGE-STICKING**

(30) Priority: 21.03.2018 CN 201810234726
(71) Applicant: Beijing Xiaomi Mobile Software Co., Ltd., Beijing 100085 (CN)
(72) Inventor: ZHONG, Guilin, Haidian District, Beijing 100085 (CN); LI, Guosheng, Beijing, Beijing 100085 (CN); LIU, Zhengliang, Beijing, Beijing 100085 (CN)
(74) Representative: Kudlek, Franz Thomas

(57) **Abstract**

A method, a device, a terminal and a storage medium for preventing a display from image-sticking are provided in the present disclosure, in the field of display technology. The method includes: acquiring a target image frame to be displayed, and determining image information of each display unit in the target image frame; determining, according to the image information of each display unit in the target image frame, the target display unit whose duration of the image information not changed reaches a preset duration threshold; and changing the images of the target display units in a consecutive preset number of image frames. Problems of premature aging of the OLED material and the phenomenon of the image-sticking due to the OLED display displays the same image for a long time can be solved. The effects of preventing OLED display screen from image-sticking and prolonging the service life of OLED material can be achieved.

## Description

### TECHNICAL FIELD

The present disclosure relates to a method, a device, a terminal and a storage medium for preventing a display from image-sticking.

### BACKGROUND

At present, many terminals use organic light-emitting diodes (OLEDs) for image display.

Usually, after the terminal displays a certain static image for a long time, if the display is turned off, a residual image of the image left will be left at the position of the image displayed in the display. This phenomenon is called image-sticking. For example, if the user turns off the TV after watching the CCTV-1 channel on the TV for a long time, a residual image of "CCTV-1" will be left at the position where the symbol "CCTV-1" is displayed in a display of the TV. For another example, after a mobile phone displays a battery icon for a long time, the mobile phone has a black screen, and a residual image of the illuminated icon will be left at the position where the battery icon is displayed in a display of the mobile phone.

Since the service life of an OLED material emitting red, green and blue lights is limited in the OLED display, once the phenomenon of image-sticking frequently occurs in the OLED display, the OLED material is likely to be prematurely aged.

### SUMMARY

The present disclosure provides a method, a device, a terminal and a storage medium for preventing a display from image-sticking.

According to a first aspect of the present invention, there is provided a method for preventing a display from image-sticking, comprising: acquiring a target image frame to be displayed, and determining image information of each display unit in the target image frame; determining, according to the image information of each display unit in the target image frame, a target display unit whose duration of the image information not changed reaches a preset duration threshold; and changing images of the target display units in a consecutive preset number of image frames.

According to a second aspect of the present invention, there is provided a device for preventing a display from image-sticking, comprising: an acquiring module configured to acquire a target image frame to be displayed, and determining image information of each display unit in the target image frame; a determining module configured to determine, according to the image information of each display unit in the target image frame, a target display unit whose duration of the image information not changed reaches a preset duration threshold; and a changing module configured to change the images of the target display units in a consecutive preset number of image frames.

According to a third aspect of the present invention, there is provided a terminal, comprising a processor and a memory, wherein the processor has stored therein at least an instruction, a program, a code set or an instruction set loaded and executed by the processor to perform the method for preventing the display from image-sticking in the first aspect of embodiments of the present disclosure.

According to a fourth aspect of the present invention, there is provided a computer-readable storage medium having stored therein at least an instruction, a program, a code set or an instruction set loaded and executed by a processor to perform the method for preventing the display from image-sticking in the first aspect of embodiments of the present disclosure.

### BRIEF DESCRIPTION OF THE DRAWINGS

FIG. 1 is a flow chart of a method for preventing a display from image-sticking according to an exemplary embodiment;
FIG. 2A is a flow chart of a method for preventing a display from image-sticking according to another exemplary embodiment;
FIG. 2B is a schematic diagram of a mobile phone interface according to an exemplary embodiment;
FIG. 3 is a block diagram of a device for preventing a display from image-sticking according to an exemplary embodiment; and
FIG. 4 is a block diagram of a terminal according to an exemplary embodiment.

### DETAILED DESCRIPTION

The word "first", "second" and other similar words mentioned herein are not intended to indicate any order, quantity, or importance, and are merely used to distinguish different components. Similarly, the word "a", "an" or the like does not denote a quantity limitation, but means that there is at least one. The word "connected", "connection" or the like is not limited to physical or mechanical connection, but may include electrical connection, either direct or indirect.

The "module" mentioned herein generally refers to programs or instructions stored in a memory and capable of performing certain functions. The "unit" mentioned herein generally refers to a functional structure logically divided. The word "unit" may be implemented by pure hardware or a combination of hardware and software.

The term "plurality" herein refers to two or more. "And/or" herein describes the association relationship of the associated objects, indicating three kinds of relationship. For example, A and/or B, can be expressed as: A exists alone, A and B exist concurrently, and B exists alone. The character "/" generally indicates that the context objects are in an "OR" relationship.

The embodiments of the present disclosure will be described in further detail with reference to the enclosed drawings, to clearly present the principle and advantages of the present disclosure.

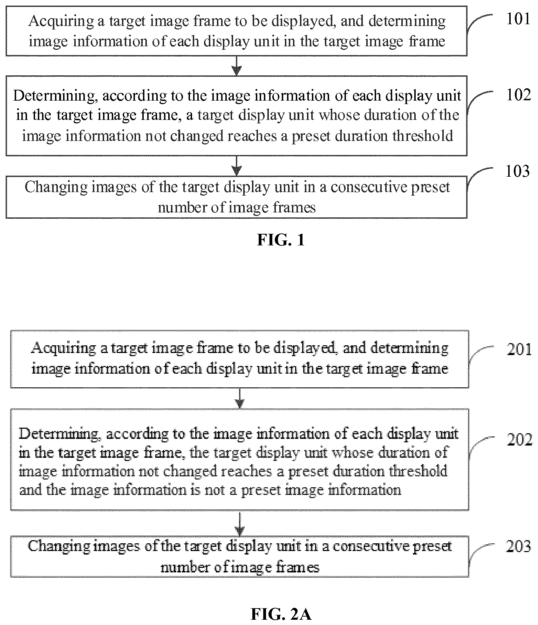

FIG. 1 is a flow chart of a method for preventing a display from image-sticking according to an exemplary embodiment. As shown in FIG. 1, the method for preventing a display from image-sticking includes following steps.

In step 101, a target image frame to be displayed is acquired, and image information of each display unit in the target image frame is determined.

In step 102, according to the image information of each display unit in the target image frame, a target display unit whose duration of the image information not changed reaches a preset duration threshold is determined.

In step 103, images of the target display units in a consecutive preset number of image frames are changed.

In summary, according to the method for preventing a display from image-sticking provided by the present invention, the target display unit whose duration of image information not changed reaches a preset duration threshold is determined according to the image information of each display unit in the target image frame in the image frames to be displayed. The images of the target display units in a consecutive preset number of image frames are changed. Since the duration of the image information of each display unit not changed does not reach the preset duration threshold, the problem of premature aging of the OLED material and the phenomenon of the image-sticking since the OLED display displays the same image for a long time can be solved. The effects of preventing OLED display screen from image-sticking and prolonging the service life of the OLED material can be achieved.

FIG. 2A is a flow chart of a method for preventing a display from image-sticking according to another exemplary embodiment. As shown in FIG. 2A, the method for preventing a display from image-sticking comprises the following steps.

In step 201, a target image frame to be displayed is acquired, and image information of each display unit in the target image frame is determined.

Optionally, the present disclosure may be applied to the display driver integrated circuit (DDIC) of a display screen. Generally, the DDIC acquires and stores the image frame transmitted by a central processing unit (CPU) through a mobile industry processor interface (MIPI) bus, and converts the image frame into a specific electric signal to drive the screen for displaying.

When the display unit is a pixel point, the step of determining the image information of each display unit in the target image frame may be replaced by: determining a channel value of each color channel of each pixel point in the target image frame.

Exemplarily, before converting the image frame into the specific electric signal, the DDIC determines the channel value of each color (RGB) channel of each pixel point in the target image frame, and compares the channel values of the same pixel point in the former and latter frame images, thereby determining whether the channel values of each pixel point in the former and latter frame images are different.

When the display unit is a display area consisted of a plurality of pixel points, the step of determining the image information of each display unit in the target image frame may be replaced by: according to a channel value of each color channel of pixel points in each display area, respectively calculating a feature code corresponding to each display area as the image information corresponding to each display area.

Exemplarily, before converting the image frame into the specific electric signal, the DDIC respectively calculates the feature code corresponding to each display area as the image information corresponding to each display area according to the channel value of each color channel of the pixel point in each display area. The feature codes of the same display area in the former and latter frame images are compared, so as to determine whether the feature codes of each display area in the former and latter frame images are different.

Optionally, the feature code of the display area is calculated by accumulating the channel values of color channels of all the pixel points in the display area.

In step 202, according to the image information of each display unit in the target image frame, the target display unit whose duration of image information not changed reaches a preset duration threshold and the image information is not a preset image information is determined.

Herein, the preset image information is the image information corresponding to pure black display content.

Since the target display unit does not perform image display by default for the image information of the pure black display content, the target display unit that does not perform image display naturally does not have the risk of image-sticking. Therefore, it is necessary to determine that the image information is not the preset image information while it is determined that the duration of the image information not changed reaches the preset duration threshold.

When the display unit is a pixel point, if the channel values of the same pixel point in the former and latter frame images are the same, it is determined that the channel value of the pixel point is not changed.

When the display unit is a display area composed of a plurality of pixels, if the feature codes of the same display area in the former and latter frame images are the same, then the feature code of the display area is not changed.

It should be noted that the preset duration threshold may be manually preset, or may be preset by a system. The preset duration threshold may be 30 minutes, one hour, two hours, etc., and the specific value of the preset duration is not limited in the present embodiment.

In step 203, images of the target display units in a consecutive preset number of image frames are changed.

The duration of image information of the target display unit not changed reaches a preset duration threshold, indicating that the target display unit always displays the same image information within the preset duration threshold. If the duration of displaying the same image information by the target display unit reaches the preset duration threshold, the target display unit has the risk of image-sticking. Therefore, when the duration of image information of the target display unit which is not changed reaches the preset duration threshold, the images of the target display units in the consecutive preset number of image frames are changed, and the image displayed by the target display unit after the change is different from the image whose display duration reaches the preset duration threshold.

Compared with the case where the display unit is the pixel point, when the display unit is a display area composed of a plurality of pixel points, the frequency that the DDIC changes the image of the target display unit is lower, and the pressure of processing the DDIC is reduced.

In a possible implementation, the step 203 may be replaced by: changing the image in the target display unit in a consecutive preset number of image frames into a preset image. Optionally, the preset image is a pure black image.

In another possible implementation, the step 203 can be replaced by changing the images of the target display units in a consecutive preset number of image frames including the target image frame and the image frames subsequent to the target image frame.

Since the target image frame is the to-be-displayed image frame cached in the terminal, after determining the target display unit whose duration of the image information not changed reaches the preset duration threshold, the terminal may directly change the image of the target display unit in a consecutive preset number of image frames including the target image frame and the image frames subsequent to the target image frame.

In yet another possible implementation, the step 203 can be replaced by: changing the images of the target display units in a consecutive preset number of image frames subsequent to the target image frame.

Optionally, the interface content element corresponding to the target display unit is determined, and the position of the interface content element is adjusted in a consecutive preset number of image frames subsequent to the target image frame.

Herein, when the terminal is a mobile device, the interface content element is an icon in a taskbar displayed by the mobile device (such as a Bluetooth icon, a headset icon, a Wireless-Fidelity (Wi-Fi) icon, etc., which is in a fixed position of the taskbar for long time).

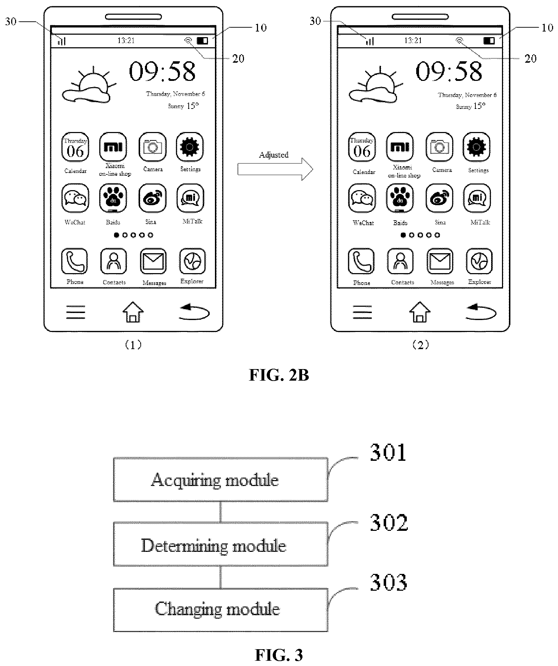

FIG. 2B is a schematic diagram of a mobile phone interface according to an exemplary embodiment. As shown in FIG. 2B (1), in the task bar 10 displayed in the mobile phone interface, taking the interface content element being Wi-Fi icon 20 and the signal icon 30 as an example, if the preset duration threshold is five hours, the display unit displaying the Wi-Fi icon 20 is the display unit A, and the display unit displaying the display signal icon 30 is the display unit B. When the DDIC in the mobile phone determines the display unit A and the display unit B whose durations of the image information are not changed for five hours, a prompt signal carrying a Wi-Fi icon identifier and a signal icon identifier is sent to the CPU, so as to trigger the CPU to adjust the positions of the Wi-Fi icon and the signal icon. The adjusted Wi-Fi icon and signal icon are combined with other image data to obtain the image frame that needs to be finally sent to the DDIC. After acquiring the image frame sent by the CPU, and converting the image frame into a specific electric signal, the DDIC drives the screen for display (as shown in FIG. 2B (2)).

It should be noted that the position adjustment of the interface content element is not limited to the adjustment of horizontal coordinates and the adjustment of longitudinal coordinates. The adjustment of the Wi-Fi icon 20 and the signal icon 30 in terms of the horizontal coordinates as shown in FIG. 2B (2) is only a possible adjustment manner.

It should be noted that in the embodiments, the CPU only adjusts the position of the interface content element after receiving the prompt signal sent by the DDIC, and always combines the adjusted Wi-Fi icon and signal icon with other image data to obtain the image frame, before the prompt signal sent by the DDIC is received next time.

In summary, according to the method for preventing a display from image-sticking provided by the present invention, the target display unit whose duration of image information not changed reaches the preset duration threshold is determined according to the image information of each display unit in the target image frame in the image frames to be displayed. The images of the target display units in a consecutive preset number of image frames are changed. Since the duration of the image information of each display unit is not changed does not reach the preset duration threshold, the problem of premature aging of the OLED material and the phenomenon of the image-sticking due to the OLED display displays the same image for a long time can be solved. The effects of preventing OLED display screen from image-sticking and prolonging the service life of the OLED material can be achieved.

In the embodiments, compared with the case where the display unit is the pixel point, when the display unit is the display area composed of a plurality of pixel points, the frequency that the DDIC changes the image of the target display unit is lower, and the pressure of processing the DDIC is lowered.

It should be noted that all the status names and the message names mentioned in the foregoing embodiments are exemplary, which are not limited in the embodiments. The same state features or the same message functions are considered to be in the protection scope of the present disclosure.

The following is a device embodiment of the present disclosure, which can be used to implement the method embodiment of the present disclosure. For the details not disclosed in the device embodiments of the present disclosure, reference can be made to the method embodiment of the present disclosure.

FIG. 3 is a block diagram of a device for preventing a display from image-sticking according to an exemplary embodiment. As shown in FIG. 3, the device for preventing a display from image-sticking includes, but is not limited to: an acquiring module 301, a determining module 302 and a changing module 303.

The acquiring module 301 is configured to acquire a target image frame to be displayed, and determine image information of each display unit in the target image frame.

The determining module 302 is configured to determine, according to the image information of each display unit in the target image frame, the target display unit whose duration of the image information not changed reaches a preset duration thresho ld.

The changing module 303 is configured to change images of the target display units in a consecutive preset number of image frames.

Optionally, the changing module 303 is further configured to change the images of the target display units in a consecutive preset number of image frames subsequent to the target image frame.

Optionally, the display unit is a pixel point, and the acquiring module 301 includes a first determining unit configured to determine a channel value of each color channel of each pixel point in the target image frame.

Optionally, the display unit is a display area composed of a plurality of pixel points, and the acquiring module 301 includes: a second determining unit configured to, according to the channel value of each color channel of the pixel points in each display area, respectively calculate a feature code corresponding to each display area as the image information corresponding to each display area.

Optionally, the changing module 303 includes: a changing unit configured to change the images in the target display units in a consecutive preset number of image frames to be a preset image; a third determining unit configured to determine an interface content element corresponding to the target display unit, and adjust the position of the interface content element in a consecutive preset number of image frames subsequent to the target image frame.

Optionally, the determining module 302 is further configured to determine, according to the image information of each display unit in the target image frame, the target display unit whose duration of image information not changed reaches the preset duration threshold and the image information is not preset image information, wherein the preset image information is the image information corresponding to pure black display content.

In summary, according to the device for preventing a display from image-sticking provided by the present invention, the target display unit whose duration of image information not changed reaches the preset duration threshold is determined according to the image information of each display unit in the target image frame in the image frames to be displayed. The images of the target display unit in a consecutive preset number of image frames are changed. Since the duration of the image information of each display unit which is not changed does not reach the preset duration threshold, the problem of premature aging of the OLED material and the phenomenon of the image-sticking since the OLED display displays the same image for a long time can be solved. The effects of preventing OLED display screen from image-sticking and prolonging the service life of the OLED material can be achieved.

With respect to the device in the above embodiments, the specific implementations of each module is described in details in the method embodiments, which may not be described in details herein.

An exemplary embodiment of the present disclosure provides a terminal which can achieve the method for preventing a display from image-sticking provided in the present disclosure. The terminal includes a processor and a memory storing instructions executed by the processor. Herein, the processor is configured to acquire a target image frame to be displayed, and determine image information of each display unit in the target image frame; determine, according to the image information of each display unit in the target image frame, the target display unit whose duration of the image information not changed reaches a preset duration threshold; and change images of the target display units in a consecutive preset number of image frames.

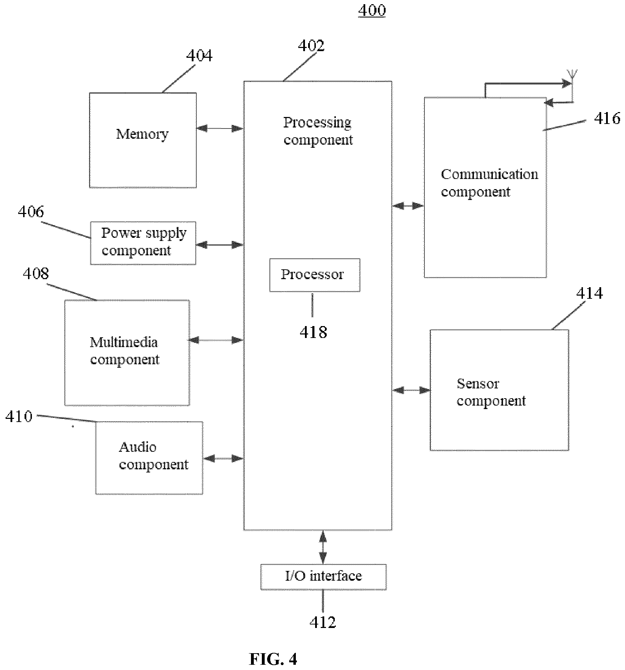

FIG. 4 is a block diagram of a terminal according to an exemplary embodiment. Exemplarily, the terminal 400 may be a mobile phone, a computer, a digital broadcast terminal, a messaging device, a game console, a tablet device, a medical device, a fitness device, a personal digital assistant, and the like.

Referring to FIG. 4, the terminal 400 may include one or more of the following components: a processing component 402, a memory 404, a power supply component 406, a multimedia component 408, an audio component 410, an input/output (I/O) interface 412, a sensor component 414, and a communication component 416.

The processing component 402 generally can control the overall operation of the terminal 400, such as operations associated with display, phone call, data communication, camera operation, and recording operation. The processing component 402 may include one or more processors 418 for executing instructions, so as to complete all or part of the steps described above. In addition, the processing component 402 may include one or more modules to facilitate the interactions between the processing component 402 and other components. For example, the processing component 402 may include a multimedia module to facilitate interaction between the multimedia component 408 and the processing component 402.

The memory 404 can be configured to store various types of data to support the operation of the terminal 400. Examples of such data can include instructions of any application or method operated on the terminal 400, contact data, phonebook data, messages, pictures, videos, and the like. The memory storage 404 may be implemented by any type of volatile or nonvolatile memory device or a combination thereof, such as static random access memory (SRAM), electrically erasable programmable read only memory (EEPROM), erasable programmable read only memory (EPROM), programmable read only memory (PROM), read only memory (ROM), magnetic memory, flash memory, disk or CD.

The power supply component 406 may provide power to the various components of the terminal 400. The power supply component 406 may include a power management system, one or more power supplies, and other components associated with generation, management, and power distribution of the terminal 400.

The multimedia component 408 may include a screen providing an output interface between the terminal 400 and the user. In some embodiments, the screen may include a liquid crystal display (LCD) and a touch panel (TP). If the screen includes a touch panel, the screen may be implemented as a touch screen to receive input signals from the user. The touch panel can include one or more touch sensors to sense touches, slides, and gestures on touch panels. The touch sensors may sense not only the boundary of the touch or slide actions, but also the duration and pressure associated with the touch or slide operation. In some embodiments, the multimedia component 408 may include a front camera and/or a rear camera. When the terminal 400 is at an operating mode, such as a shooting mode or a video mode, the front camera and/or the rear camera can receive external multimedia data. Each front camera and rear camera can be a fixed optical lens system or have focal length and optical zoom capability.

The audio component 410 can be configured to output and/or input an audio signal. For example, the audio component 410 can include a microphone (MIC) that is configured to receive external audio signals when the terminal 400 is in an operating mode, such as a call mode, a recording mode, and a voice recognition mode. The received audio signals may be further stored in the memory 404 or transmitted via the communication component 416. In some embodiments, the audio component 410 can also include a speaker for outputting the audio signals.

The I/O interface 412 can provide the interface between the processing component 402 and a peripheral interface module. The peripheral interface module may be a keyboard, a click wheel, buttons, or the like. The buttons may include, but are not limited to, a home button, a volume button, a start button, and a lock button.

The sensor component 414 may include one or more sensors for providing the terminal 400 with various aspects of status assessments. For example, the sensor component 414 may detect the on/off state of the terminal 400, the relative positioning of the components, such as the display and keypad of the terminal 400, and the sensor component 414 may also detect position changes of the terminal 400 or any component thereof, presence or absence of the contact between the user and the terminal 400, orientation or acceleration/deceleration of the terminal 400, or the temperature changes of the terminal 400. The sensor component 414 may include a proximity sensor configured to detect the presence of a nearby object without any physical contact. The sensor component 414 may also include a light sensor, such as a CMOS or CCD image sensor, for use in imaging applications. In some embodiments, the sensor component 814 may also include acceleration sensors, gyro sensors, magnetic sensors, pressure sensors, or temperature sensors.

The communication component 416 can be configured to facilitate wired or wireless communication between the terminal 400 and other apparatuses. The terminal 400 may access a wireless network based on a communication standard, such as WiFi, 2G or 3G, or a combination thereof. In an exemplary embodiment, the communication component 416 can receive broadcast signals or broadcast-related information from an external broadcast management system via broadcast channels. In an exemplary embodiment, the communication component 416 can also include a near field communication (NFC) module to facilitate the short-range communication. For example, the NFC module may be implemented based on radio frequency identification (RFID) technology, infrared data association (IrDA) technology, ultra wideband (UWB) technology, Bluetooth (BT) technology and other technologies.

In an exemplary embodiment, the terminal 400 may be implemented by one or more application specific integrated circuits (ASICs), digital signal processors (DSPs), digital signal processing devices (DSPDs), programmable logic devices (PLDs), field programmable gate array (FPGA), controllers, microcontrollers, microprocessors, or other electronic components for performing the method for preventing a display from image-sticking described in the above method embodiments.

In an exemplary embodiment, there is also provided a non-transitory computer-readable storage medium comprising instructions, such as the memory 404 including the instructions, the instructions may be executed by the processor 418 of the terminal 400 to complete the method for preventing a display from image-sticking described above. For example, the non-transitory computer readable storage medium may be a ROM, a random access memory (RAM), a CD-ROM, a magnetic tape, a floppy disk, an optical data storage device, etc.

A non-transitory computer-readable storage medium containing instructions that, when executed by a processor of the terminal, causes the terminal to implement the method for preventing the display from image-sticking. The method incudes: acquiring a target image frame to be displayed, and determining image information of each display unit in a target image frame; determining, according to the image information of each display unit in the target image frame, the target display unit whose duration of the image information not changed reaches a preset duration threshold; and changing the image of the target display unit in a consecutive preset number of image frames.

Optionally, said changing the images of the target display units in a consecutive preset number of image frames includes: changing the images of the target display units in a consecutive preset number of image frames subsequent to the target image frame.

Optionally, the display unit is a pixel point, and said determining the image information of each display unit in the target image frame includes: determining a channel value of each color channel of each pixel point in the target image frame.

Optionally, the display unit is a display area composed of a plurality of pixel points, and said determining the image information of each display unit in the target image frame includes: according to the channel value of each color channel of the pixel points in each display area, respectively calculating a feature code corresponding to each display area as the image information corresponding to each display area.

Optionally, said changing the images of the target display units in a consecutive preset number of image frames includes: changing the images in the target display units in a consecutive preset number of image frames to be a preset image; or determining an interface content element corresponding to the target display unit, and adjusting the position of the interface content element in a consecutive preset number of image frames subsequent to the target image frame.

Optionally, said determining, according to the image information of each display unit in the target image frame, the target display unit whose duration of the image information not changed reaches a preset duration threshold includes: determining, according to the image information of each display unit in the target image frame, the target display unit whose duration of the image information not changed reaches the preset duration threshold and the image information is not a preset image information, wherein the preset image information is the image information corresponding to pure black display content.

In the embodiments of the present disclosure, the target display unit whose duration of the image information not changed reaches the preset duration threshold is determined according to the image information of each display unit in the target image frame in the image frames to be displayed. The images of the target display units in a consecutive preset number of image frames are changed. Since the duration of the image information of each display unit which is not changed does not reach the preset duration threshold, the problem of premature aging of the OLED material and the phenomenon of the image-sticking due to the OLED display displays the same image for a long time can be solved. The effects of preventing OLED display screen from image-sticking and prolonging the service life of the OLED material can be achieved.

It should be understood that the singular form "one" ("a", "an" and "the") used in the context is intended to include the plural form, unless the context clearly supports the exception case. The "and/or" used in the text is intended to include any and all possible combinations of the one or more listed associated items.

After considering the specification and practice of the present disclosure, those skilled in the art will readily recognize other implementations of the present disclosure. This disclosure intends to cover any variations, uses, or adaptations of the present disclosure following the general principles thereof and including such departures from the present disclosure as come within known or customary practice in the art. It is intended that the specification and examples be considered as exemplary only, and a true scope and spirit of the present disclosure are indicated by the following claims.

It should be understood that the present disclosure is not limited to the exact structure that has been described above and illustrated in the accompanying drawings, and that various modifications and changes can be made without departing from the scope thereof. The scope of the present disclosure is only limited by the appended claims.

## Claims

1. A method for preventing a display from image-sticking, comprising:
acquiring a target image frame to be displayed, and determining image information of each display unit in the target image frame (101; 201);
determining, according to the image information of each display unit in the target image frame, a target display unit whose duration of the image information not changed reaches a preset duration threshold (102); and
changing images of the target display units in a consecutive preset number of image frames (103; 203).

2. The method according to claim 1, wherein said changing the images of the target display unit in the consecutive preset number of image frames comprises:
changing images of target display units in the consecutive preset number of image frames subsequent to the target image frame.

3. The method according to claim 1 or 2, wherein the display unit is a pixel point, and said determining the image information of each display unit in the target image frame comprises:
determining a channel value of each color channel of each pixel point in the target image frame.

4. The method according to any one of the preceding claims, wherein the display unit is a display area composed of a plurality of pixel points, and said determining the image information of each display unit in the target image frame comprises:
calculating a feature code corresponding to each display area respectively as image information corresponding to each display area according to the channel value of each color channel of the pixel points in each display area.

5. The method according to any one of claims 2 to 4, wherein said changing the images of the target display units in the consecutive preset number of image frames comprises:
changing the images in the target display units in the consecutive preset number of image frames into a preset image.

6. The method according to any one of claims 2 to 5, wherein said changing the images of the target display units in the consecutive preset number of image frames comprises:
determining an interface content element corresponding to the target display unit, and adjusting a position of the interface content element in a consecutive preset number of image frames subsequent to the target image frame.

7. The method according to any one of the preceding claims, wherein said determining, according to the image information of each display unit in the target image frame, the target display unit whose duration of the image information not changed reaches the preset duration threshold (102) comprises:
determining, according to the image information of each display unit in the target image frame, the target display unit whose duration of the image information not changed reaches the preset duration threshold and image information is not preset image information (202), wherein the preset image information is image information corresponding to pure black display content.

8. A device for preventing a display from image-sticking, comprising:
an acquiring module (301) configured to acquire a target image frame to be displayed, and determining image information of each display unit in the target image frame;
a determining module (302) configured to determine, according to the image information of each display unit in the target image frame, a target display unit whose duration of the image information not changed reaches a preset duration threshold; and
a changing module (303) configured to change the images of the target display units in a consecutive preset number of image frames.

9. The device according to claim 8, wherein the changing module (303) is further configured to change images of the target display units in a consecutive preset number of image frames subsequent to the target image frame.

10. The device according to claim 8 or 9, wherein the display unit is a pixel point, and the acquiring module (301) comprises:
a first determining unit configured to determine a channel value of each color channel of each pixel point in the target image frame.

11. The device according to any one of claims 8 to 10, wherein the display unit is a display area composed of a plurality of pixel points, and the acquiring module (301) comprises:
a second determining unit configured to calculate a feature code corresponding to each display area respectively as the image information corresponding to each display area according to the channel value of each color channel of the pixel points in each display.

12. The device according to any one of claims 8 to 11, wherein the changing module comprises:
a changing unit configured to change the images in the target display units in the consecutive preset number of image frames to be a preset image.

13. The device according to any one of claims 9 to 12, wherein the changing module comprises:
a third determining unit configured to determine an interface content element corresponding to the target display unit, and adjust a position of the interface content element in a consecutive preset number of image frames subsequent to the target image frame

14. A terminal, comprising a processor (418) and a memory (404), wherein the memory has stored therein at least an instruction, a program, a code set or an instruction set loaded and executed by the processor to perform the method for preventing the display from image-sticking according to any one of claims 1-7.

15. A computer-readable storage medium having stored therein at least an instruction, a program, a code set or an instruction set loaded and executed by a processor to perform the method for preventing the display from image-sticking according to any one of claims 1-7.
